(19) **Europäisches Patentamt / European Patent Office / Office européen des brevets**

(11) **EP 2 717 158 A1**

(12) **EUROPEAN PATENT APPLICATION**
published in accordance with Art. 153(4) EPC

(43) Date of publication:
**09.04.2014 Bulletin 2014/15**

(21) Application number: **13782928.9**

(22) Date of filing: **25.04.2013**

(51) Int Cl.:
**G06F 9/455** (2006.01)

(86) International application number:
**PCT/CN2013/074704**

(87) International publication number:
**WO 2014/029219 (27.02.2014 Gazette 2014/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2012 CN 201210298873**

(71) Applicant: **Huawei Technologies Co., Ltd.**
**Shenzhen, Guangdong 518129 (CN)**

(72) Inventor: **ZHAO, Yanbin**
**Shenzhen City, Guangdong 518129 (CN)**

(74) Representative: **Maiwald Patentanwalts GmbH**
**Engineering**
**Elisenhof**
**Elisenstrasse 3**
**80335 München (DE)**

(54) **METHOD AND DEVICE FOR INTEGRATING VIRTUALIZED CLUSTER, AND VIRTUALIZED CLUSTER SYSTEM**

(57) The present invention discloses a method and an apparatus for integration of a virtual cluster, and a virtual cluster system, and relates to the field of computer technologies. The method includes: selecting, according to a cluster load, a physical machine to be integrated; determining a migration time and an interrupt time that are used to migrate each virtual machine on the physical machine to be integrated; determining, according to the migration time and the interrupt time, a migration cost to migrate each virtual machine on the physical machine to be integrated; selecting, according to the migration cost, a virtual machine to be migrated; selecting a target physical machine according to the cluster load; and migrating the selected virtual machine to be migrated to the selected target physical machine. With the present invention, a migration time and an interrupt time that are used to migrate a virtual machine are determined; and a migration cost to migrate the virtual machine is determined according to the migration time and the interrupt time, so that virtual cluster integration is optimized according to the migration cost. This can increase the service level of a virtual cluster on the basis of ensuring the integrated performance of the virtual cluster, thereby improving user experience.

FIG. 1

EP 2 717 158 A1

**Description**

**CROSS-REFERENCE TO RELATED APPLICATION**

This application claims priority to Chinese Patent Application No. 201210298873.6, filed with the Chinese Patent Office on August 21, 2012 and entitled "METHOD AND APPARATUS FOR INTEGRATION OF VIRTUAL CLUSTER AND VIRTUAL CLUSTER SYSTEM", which is incorporated herein by reference in its entirety.

**TECHNICAL FIELD**

The present invention relates to the field of computer technologies, and in particular, to a method and an apparatus for integration of a virtual cluster, and a virtual cluster system.

**BACKGROUND**

With the rapid development of computer technologies, more and more companies and research institutions begin to focus on power consumption and resource utilization of computers, while cloud computing is a critical computing mode. Being a critical technology based on an infrastructure layer in the cloud computing, server virtualization virtualizes physical machines to deploy a plurality of virtual machines on a single physical machine to form a virtual cluster, so as to increase resource utilization of the physical machine. To utilize energy sources more effectively, a cluster integration feature is incorporated into the virtual cluster.

A virtual cluster integration manner in the prior art is as follows: after a load of the whole cluster has been lower than a threshold for a period of time, a minimum number of physical machines is first determined according to a resource distribution condition; then, a virtual machine migration instruction and a physical machine power-off instruction are sent according to a distribution condition of virtual machines on physical machines in a current cluster; virtual machines on a light-loaded physical machine are selected for migration according to the migration instruction, and after all virtual machine migration instructions are executed, the physical machine power-off instruction is executed.

During the implementation of the present invention, the inventor discovers that the prior art has at least the following problems:

In the virtual cluster integration manner in the prior art, when a physical machine to be powered off is selected, a light-loaded physical machine is generally selected wherever possible, which may affect the overall service level of the cluster during migration of virtual machines. In addition, there are generally a large number of virtual machines to be migrated.

During migration of the virtual machines, such operations as network transmission need to be occupied, which not only affects the overall service level of the cluster but also lowers user experience.

SUMMARY

Therefore, embodiments of the present invention provide a method and an apparatus for integration of a virtual cluster, and a virtual cluster system, to solve the problem of affecting the service level of a cluster and lowering user experience when the cluster is integrated. The technical solutions are as follows:

In a first aspect, a method for integration of a virtual cluster is provided, where the method includes:

selecting, according to a cluster load, a physical machine to be integrated;
determining a migration time and an interrupt time that are used to migrate each virtual machine on the physical machine to be integrated;

determining, according to the migration time and the interrupt time, a migration cost to migrate each virtual machine on the physical machine to be integrated;
selecting, according to the migration cost, a virtual machine to be migrated;
selecting a target physical machine according to the cluster load; and migrating the selected virtual machine to be migrated to the selected target physical machine.

In a first possible implementation manner of the first aspect, the determining a migration time used to migrate each virtual machine on the physical machine to be integrated specifically includes:

determining a memory before migration, an average memory change rate during migration, and a network transmission rate during migration for each virtual machine on the physical machine to be integrated; and

determining, according to the memory before migration, the average memory change rate during migration, and the network transmission rate during migration, of each virtual machine on the physical machine to be integrated, the migration time used to migrate each virtual machine on the physical machine to be integrated.

With reference to the first possible implementation manner of the first aspect, in a second possible implementation manner, the determining an average memory change rate during migration for each virtual machine on the physical machine to be integrated specifically includes:

classifying all virtual machines on the physical machine to be integrated into different types according to a feature, and estimating a memory change rate during migration for virtual machines of a same type;

recording a memory change rate of each virtual machine on the physical machine to be integrated during a previous migration; and

determining, according to the type, the estimated memory change rate, and the memory change rate during the previous migration, of each virtual machine on the physical machine to be integrated, the average memory change rate during migration for each virtual machine on the physical machine to be integrated.

With reference to the first aspect, in a third possible implementation manner, the determining an interrupt time used to migrate each virtual machine on the physical machine to be integrated specifically includes:

determining a transmission time in a last iteration and a recovery time on a target physical machine during a previous migration for each virtual machine on the physical machine to be integrated; and

determining, according to the transmission time and the recovery time, the interrupt time used to migrate each virtual machine on the physical machine to be integrated.

With reference to the third possible implementation manner of the first aspect, in a fourth possible implementation manner, the determining a transmission time in a last iteration during a previous migration for each virtual machine on the physical machine to be integrated specifically includes:

determining a memory before migration, an average memory change rate during migration, and a network transmission rate during migration for each virtual machine on the physical machine to be integrated; and

determining, according to the memory before migration, the average memory change rate during migration, and the network transmission rate during migration, of each virtual machine on the physical machine to be integrated, the transmission time in the last iteration during the previous migration for each virtual machine on the physical machine to be integrated.

With reference to the first aspect, in a fifth possible implementation manner, the selecting, according to the migration cost, a virtual machine to be migrated specifically includes:

selecting, from virtual machines on the physical machine to be integrated, a virtual machine with a migration cost reaching a first threshold as the virtual machine to be migrated.

With reference to the fifth possible implementation manner of the first aspect, in a sixth possible implementation manner, before the migrating the selected virtual machine to be migrated to the selected target physical machine, the method further includes:

judging whether the cluster load is balanced after the selected virtual machine to be migrated is migrated to the selected target physical machine;

if the cluster load is balanced, performing the step of migrating the selected virtual machine to be migrated to the selected target physical machine; and

if the cluster load is unbalanced, re-performing the steps of selecting, according to a cluster load, a physical machine to be integrated, determining a migration time and an interrupt time that are used to migrate each virtual machine on the physical machine to be integrated, determining, according to the migration time and the interrupt time, a migration cost to migrate each virtual machine on the physical machine to be integrated, selecting, according to the migration cost, a virtual machine to be migrated, and selecting a target physical machine according to the cluster load.

With reference to the first aspect, in a seventh possible implementation manner, the selecting, according to the migration cost, a virtual machine to be migrated specifically includes:

determining, according to the migration costs of all virtual machines on the physical machine to be integrated, a power-off cost of the physical machine to be integrated; and

selecting, from the physical machine to be integrated, a physical machine to be integrated with a power-off cost reaching a second threshold, and determining all virtual machines on the physical machine to be integrated with the power-off cost reaching the second threshold as virtual machines to be migrated.

With reference to the seventh possible implementation manner of the first aspect, in an eighth possible implementation manner, after the migrating the selected virtual machine to be migrated to the selected target physical machine, the method further includes:

controlling the physical machine to be integrated with the power-off cost reaching the second threshold to be powered off.

In a second aspect, an apparatus for integration of a virtual cluster is further provided, where the apparatus includes:

a first selecting module, configured to select, according to a cluster load, a physical machine to be integrated;

a first determining module, configured to determine a migration time used to migrate each virtual machine on the physical machine to be integrated selected by the first selecting module;

a second determining module, configured to determine an interrupt time used to migrate each virtual machine on the physical machine to be integrated selected by the first selecting module;

a third determining module, configured to determine, according to the migration time determined by the first determining module and the interrupt time determined by the second determining module, a migration cost to migrate each virtual machine on the physical machine to be integrated;

a second selecting module, configured to select, according to the migration cost determined by the third determining module, a virtual machine to be migrated;

a third selecting module, configured to select a target physical machine according to the cluster load; and

a migrating module, configured to migrate the virtual machine to be migrated selected by the second selecting module to the target physical machine selected by the third selecting module.

In a first possible implementation manner of the second aspect, the first determining module is specifically configured to determine a memory before migration, an average memory change rate during migration, and a network transmission rate during migration for each virtual machine on the physical machine to be integrated; and determine, according to the memory before migration, the average memory change rate during migration, and the network transmission rate during migration, of each virtual machine on the physical machine to be integrated, the migration time used to migrate each virtual machine on the physical machine to be integrated.

With reference to the first possible implementation manner of the second aspect, in a second possible implementation manner, the first determining module is specifically configured to classify all virtual machines on the physical machine to be integrated into different types according to a feature, and estimate a memory change rate during migration for virtual machines of a same type; record a memory change rate of each virtual machine on the physical machine to be integrated during a previous migration; and determine, according to the type, the estimated memory change rate, and the memory change rate during the previous migration, of each virtual machine on the physical machine to be integrated, the average memory change rate during migration for each virtual machine on the physical machine to be integrated.

With reference to the second aspect, in a third possible implementation manner, the second determining module is specifically configured to determine a transmission time in a last iteration and a recovery time on a target physical machine during a previous migration for each virtual machine on the physical machine to be integrated; and determine, according to the transmission time and the recovery time, the interrupt time used to migrate each virtual machine on the physical machine to be integrated.

In a third possible implementation manner of the second aspect, in a fourth possible implementation manner, the second determining module is specifically configured to determine a memory before migration, an average memory change rate during migration, and a network transmission rate during migration for each virtual machine on the physical machine to be integrated; and determine, according to the memory before migration, the average memory change rate during migration, and the network transmission rate during migration, of each virtual machine on the physical machine to be integrated, the transmission time in the last iteration during the previous migration for each virtual machine on the physical machine to be integrated.

With reference to the second aspect, in a fifth possible implementation manner, the second selecting module is specifically configured to select, from virtual machines on the physical machine to be integrated, a virtual machine with a migration cost reaching a first threshold as the virtual machine to be migrated.

With reference to the fifth possible implementation manner of the second aspect, in a sixth possible implementation manner, the apparatus further includes:

a judging module, configured to judge whether the cluster load is balanced after the selected virtual machine to be migrated is migrated to the selected target physical machine;

where the migrating module is configured to: when the judging module judges that the cluster load is balanced after the selected virtual machine to be migrated is migrated to the selected target physical machine, perform the step of migrating the selected virtual machine to be migrated to the selected target physical machine; and

when the judging module judges that the cluster load is unbalanced after the selected virtual machine to be migrated is migrated to the selected target physical machine, the first selecting module, the first determining module, the second determining module, the third determining module, the second selecting module, and the third selecting module re-perform the steps performed by them respectively.

With reference to the second aspect, in a seventh possible implementation manner, the second selecting module is specifically configured to determine, according to the migration costs of all virtual machines on the physical machine to be integrated, a power-off cost of the physical machine to be integrated; and select, from the physical machine to be integrated, a physical machine to be integrated with a power-off cost reaching a second threshold, and determine all virtual machines on the physical machine to be integrated with the power-off cost reaching the second threshold as virtual machines to be migrated.

With reference to the seventh possible implementation manner of the second aspect, in an eighth possible implementation manner, the apparatus further includes:

a controlling module, configured to control the physical machine to be integrated with the power-off cost reaching the second threshold to be powered off.

In a third aspect, a virtual cluster system is further provided, where the system includes a plurality of physical machines with communication connections, where each physical machine is deployed with at least one virtual machine and one physical machine of the plurality of physical machines is deployed with an apparatus for integration of a virtual cluster;

where the apparatus for integration of a virtual cluster is the foregoing apparatus for integration of a virtual cluster.

The technical solutions provided in the embodiments of the present invention bring about the following beneficial effects:

A migration time and an interrupt time that are used to migrate a virtual machine are determined; and a migration cost to migrate the virtual machine is determined according to the migration time and the interrupt time, so that virtual cluster integration is optimized according to the migration cost. This can increase the service level of a virtual cluster on the basis of ensuring the integrated performance of the virtual cluster, thereby improving user experience.

**BRIEF DESCRIPTION OF DRAWINGS**

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a flowchart of a first method for integration of a virtual cluster according to an embodiment of the present invention;

FIG. 2 is a flowchart of a second method for integration of a virtual cluster according to another embodiment of the present invention;

FIG. 3 is a flowchart of a third method for integration of a virtual cluster according to another embodiment of the present invention;

FIG. 4 is a schematic structural diagram of a first apparatus for integration of a virtual cluster according to another embodiment of the present invention;

FIG. 5 is a schematic structural diagram of a second apparatus for integration of a virtual cluster according to another embodiment of the present invention;

FIG. 6 is a schematic structural diagram of a third apparatus for integration of a virtual cluster according to another embodiment of the present invention; and
FIG. 7 is a schematic diagram of physical deployment of a virtual cluster system according to another embodiment of the present invention.

## DESCRIPTION OF EMBODIMENTS

To make the objectives, technical solutions, and advantages of the present invention more comprehensible, the following further describes the embodiments of the present invention in detail with reference to the accompanying drawings.

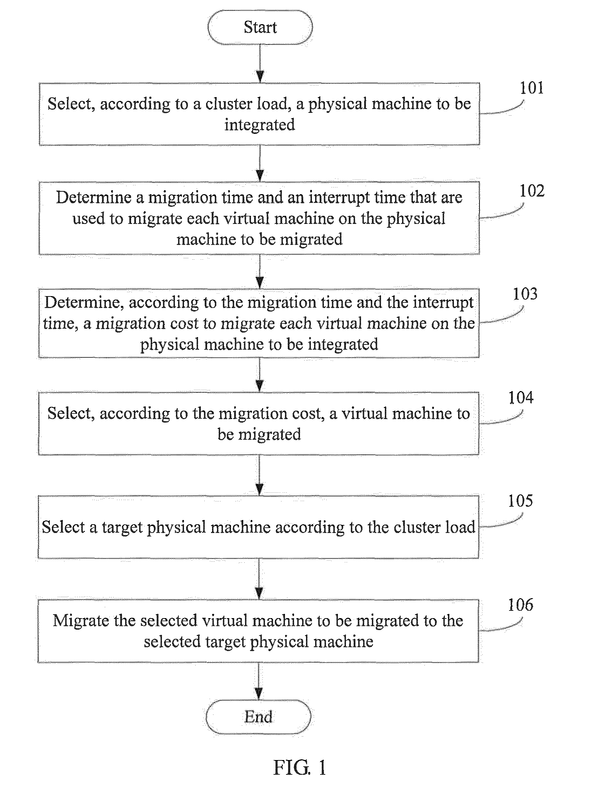

An embodiment of the present invention provides a method for integration of a virtual cluster. As shown in FIG. 1, the flowchart of the method provided in this embodiment is specifically as follows:

101. Select, according to a cluster load, a physical machine to be integrated.
102. Determine a migration time and an interrupt time that are used to migrate each virtual machine on the physical machine to be integrated.

The determining a migration time used to migrate each virtual machine on the physical machine to be integrated includes but is not limited to:

determining a memory before migration, an average memory change rate during migration, and a network transmission rate during migration for each virtual machine on the physical machine to be integrated; and
determining, according to the memory before migration, the average memory change rate during migration, and the network transmission rate during migration, of each virtual machine on the physical machine to be integrated, the migration time used to migrate each virtual machine on the physical machine to be integrated.

Further, the determining an average memory change rate during migration for each virtual machine on the physical machine to be integrated includes but is not limited to:

classifying all virtual machines on the physical machine to be integrated into different types according to a feature, and estimating a memory change rate during migration for each type of virtual machines;
recording a memory change rate of each virtual machine on the physical machine to be integrated during a previous migration; and
determining, according to the type, the estimated memory change rate, and the memory change rate during the previous migration, of each virtual machine on the physical machine to be integrated, the average memory change rate during migration for each virtual machine on the physical machine to be integrated.

The determining an interrupt time used to migrate each virtual machine on the physical machine to be integrated includes but is not limited to:

determining a transmission time in a last iteration and a recovery time on a target physical machine during a previous migration for each virtual machine on the physical machine to be integrated; and
determining, according to the transmission time and the recovery time, the interrupt time used to migrate each virtual machine on the physical machine to be integrated.

Further, the determining a transmission time in the last iteration during the previous migration for each virtual machine on the physical machine to be integrated includes but is not limited to:

determining a memory before migration, an average memory change rate during migration, and a network transmission rate during migration for each virtual machine on the physical machine to be integrated; and
determining, according to the memory before migration, the average memory change rate during migration, and the network transmission rate during migration, of each virtual machine on the physical machine to be integrated, the transmission time in the last iteration during the previous migration for each virtual machine on the physical machine to be integrated.

103. Determine, according to the migration time and the interrupt time, a migration cost to migrate each virtual machine on the physical machine to be integrated.
104. Select, according to the migration cost, a virtual machine to be migrated.
The selecting, according to the migration cost, a virtual machine to be migrated includes but is not limited to:

selecting, from virtual machines on the physical machine to be integrated, a virtual machine with a migration cost reaching a first threshold as the virtual machine to be migrated.

Optionally, the selecting, according to the migration cost, a virtual machine to be migrated includes but is not limited to:

determining, according to the migration costs of all virtual machines on the physical machine to be integrated, a power-off cost of the physical machine to be integrated; and

selecting, from the physical machine to be integrated, a physical machine to be integrated with a power-off cost reaching a second threshold, and determining all virtual machines on the physical machine to be integrated with the power-off cost reaching the second threshold as virtual machines to be migrated.

105. Select a target physical machine according to the cluster load.

106. Migrate the selected virtual machine to be migrated to the selected target physical machine.

Further, before the migrating the selected virtual machine to be migrated to the selected target physical machine, the method further includes:

judging whether the cluster load is balanced after the selected virtual machine to be migrated is migrated to the selected target physical machine;

if the cluster load is balanced, performing the step of migrating the selected virtual machine to be migrated to the selected target physical machine; and

if the cluster load is unbalanced, re-performing the steps of selecting, according to a cluster load, a physical machine to be integrated, determining a migration time and an interrupt time that are used to migrate each virtual machine on the physical machine to be integrated, determining, according to the migration time and the interrupt time, a migration cost to migrate each virtual machine on the physical machine to be integrated, selecting, according to the migration cost, a virtual machine to be migrated, and selecting a target physical machine according to the cluster load.

Further, after the migrating the selected virtual machine to be migrated to the selected target physical machine, the method further includes:

controlling the physical machine to be integrated with the power-off cost reaching the second threshold to be powered off.

By using the method provided in this embodiment, a migration time and an interrupt time that are used to migrate a virtual machine are determined; and a migration cost to migrate the virtual machine is determined according to the migration time and the interrupt time, so that virtual cluster integration is optimized according to the migration cost. This can increase the service level of a virtual cluster on the basis of ensuring the integrated performance of the virtual cluster, thereby improving user experience.

To make the method for integration of a virtual cluster that is provided in the foregoing embodiment clearer, the method for integration of a virtual cluster is described with reference to the content of the foregoing embodiment and by using the following embodiment as an example. The details are described in the following embodiments.

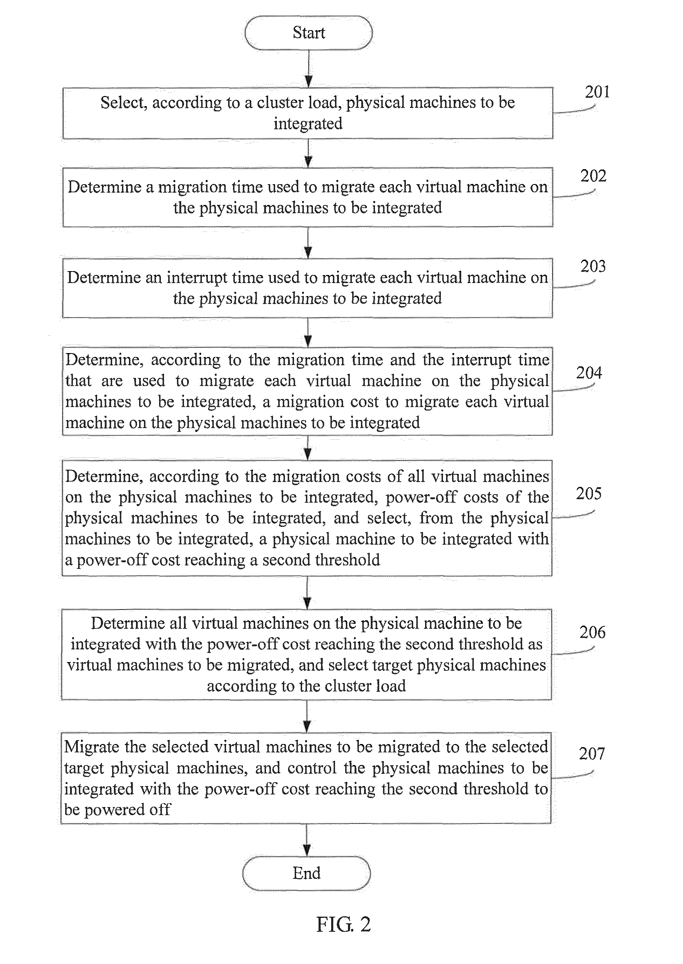

Another embodiment of the present invention provides a method for integration of a virtual cluster. With reference to the content of the foregoing embodiment, this method is described with respect to a case where demands for virtual cluster resources drop and based on an assumption that after working virtual machines are integrated into several physical machines during the integration of the virtual cluster, physical machines with an empty load are controlled to be powered off. As shown in FIG. 2, the flowchart of the method provided in this embodiment is specifically as follows:

201. Select, according to a cluster load, physical machines to be integrated.

With respect to this step, because physical machines controlled to be powered off are subsequently selected from the physical machines to be integrated selected in this step, when the physical machines to be integrated are selected according to the cluster load in this step, all physical machines in a cluster can be used as physical machines to be integrated. After a migration cost is determined for each physical machine in a subsequent step, which physical machines are powered off are selected according to the migration cost.

In addition, to save time needed to determine the migration cost of each physical machine, when the physical machines to be integrated are selected according to the cluster load in this step, a preset number of physical machines may also be selected from the cluster according to the cluster load and used as physical machines to be integrated. This embodiment sets no specific limitation on the preset number of selected physical machines to be integrated. During a specific implementation, the number of physical machines containing all current virtual machines may be first judged by using a packing algorithm according to a total load of the current cluster; and N (N is an integer greater than 0), the number of physical machines that need to be powered off is determined according to the current number of physical machines, and a preset number, which is greater than N, of physical machines are selected from the cluster and used as physical machines to be integrated. It should be noted that, to ensure that virtual machines in the integrated cluster can run more efficiently, when the number of physical machines containing all current virtual machines is judged in this step, certain resources may be reserved for each physical machine.

202. Determine a migration time used to migrate each virtual machine on the physical machines to be integrated.

With respect to this step, because additional overheads are imposed on the performance of a virtual machine and a network during migration of the virtual machine, the shorter the time used to migrate the virtual machine is, the lower the migration cost is. When the migration time used to migrate each virtual machine on the physical machines to be integrated is determined in this step, a memory before migration, an average memory change rate during migration, and a network transmission rate during migration may be first determined for each virtual machine on the physical machines to be integrated; and then the migration time used to migrate each virtual machine on the physical machines to be integrated is determined according to the memory before migration, the average memory change rate during migration, and the network transmission rate during migration, of each virtual machine on the physical machines to be integrated. The migration time varies with the migration manners. With respect to a migration manner where all memories of a virtual machine are first copied to a target physical machine, and then after a plurality of iterations, memories modified by the virtual machine are copied to the physical machine, assuming that the memory before migration of the virtual machine is M, that the average memory change rate during migration of the virtual machine is D, and that the network transmission rate during migration of the virtual machine is R, the migration time T used to migrate each virtual machine on the physical machines to be integrated may be obtained by using the following formulas:

$$T = \sum_{i=0}^{n} T_i = \frac{M}{R-D} * (1 - (\frac{D}{R})^{n+1}) \qquad T_i = \begin{cases} M/R & i=0 \\ (D*T_{i-1})/R & i>0 \end{cases}$$

where, n refers to the number of iterations; according to the foregoing formulas, the migration time mainly includes two parts: when i=0, the migration time is time $T_0$ when all memories of the virtual machine are transmitted for the first time; when i>0, the migration time is $T_i$ when modified memories of the virtual machine are copied to the physical machine during subsequent multiple iterations. The memory M before migration of the virtual machine and the network transmission rate R during migration of the virtual machine may be obtained by collecting resources. With respect to a manner of acquiring the average memory change rate D during migration of the virtual machine, this embodiment uses a learning-based estimation method to estimate the average memory change rate D during migration of the virtual machine, where the method includes but is not limited to the following steps:

Step a: Classify all virtual machines on the physical machines to be integrated into different types according to a feature, and estimate a memory change rate during migration for virtual machines of a same type.
Step b: Record a memory change rate of each virtual machine on the physical machines to be integrated during a previous migration.
Step c: Determine, according to the type, the estimated memory change rate, and the memory change rate during the previous migration, of each virtual machine on the physical machines to be integrated, an average memory change rate for each virtual machine on the physical machines to be integrated.

During a specific implementation, with respect to the foregoing step a, the feature include but are not limited to CPU (Central Processing Unit, central processing unit) utilization, memory utilization, or IO (Input Output, input output) utilization when a virtual machine runs a service. When virtual machines on the physical machines to be integrated are classified into different types according to the feature, the CPU utilization, the memory utilization, or the IO utilization may be first sampled on each virtual machine on the physical machines to be integrated, and then the virtual machines on the physical machines to be integrated are classified into different types according to a sampling result, where the types include but are not limited to a CPU intensive virtual machine, a memory intensive virtual machine, or an IO intensive virtual machine. In addition, in a cluster oriented to a data center, most virtual machines run a specific service, and therefore, virtual machines of one type have similar service logic. Therefore, information during migration of virtual machines of a same type can be estimated to obtain a memory change rate $D_h$ during migration of the virtual machines of the same type. With respect to the foregoing step b, when managing every migration of a virtual machine, the cluster may record a memory change rate Di during a previous migration of the virtual machine. In step c, when the average memory change rate D of each virtual machine on the physical machines to be integrated is determined according to the type, the estimated memory change rate, and the memory change rate during the previous migration, of each virtual machine on the physical machines to be integrated, the average memory change rate may be specifically obtained by using the following formula:

$$D = \lambda D_h + (1 - \lambda) D_i$$

where, $D_h$ is the currently estimated memory change rate of this type of virtual machines, Di refers to the memory change rate during the previous migration of this type of virtual machines, and $\lambda$ is a weight coefficient and varies with the type of virtual machines, and the specific value is set according to the service of a specific virtual machine, which is not specifically limited in this embodiment.

In addition to the foregoing manner of determining the migration time used to migrate each virtual machine on the physical machines to be integrated, other determining manners may also be selected, which are not specifically limited in this embodiment.

203. Determine an interrupt time used to migrate each virtual machine on the physical machines to be integrated.

Specifically, a virtual machine is interrupted in a last iteration during migration of the virtual machine, and then all remaining memories of the virtual machine are transmitted to a target physical machine at once. During this period of time, the virtual machine cannot provide corresponding service, which affects the service level of the cluster. Therefore, the shorter the interrupt time during migration of the virtual machine, the better. Therefore, this step uses, but not limited to, the following manner:

determining a transmission time in the last iteration and a recovery time on a target physical machine during the previous migration for each virtual machine on the physical machines to be integrated; and

determining, according to the transmission time and the recovery time, the interrupt time used to migrate each virtual machine on the physical machines to be integrated.

During a specific implementation, the interrupt time t used to migrate each virtual machine on the physical machine to be integrated, which is determined according to the transmission time and the recovery time, may be calculated by using the following formula:

$$t = T_n + T_r$$

where, n refers to the number of iterations, Tn refers to the transmission time in the last iteration, and Tr refers to the time of recovery of a virtual machine on the target physical machine, where the Tr is generally a constant. When the transmission time Tn in the last iteration during the previous migration of each virtual machine on the physical machines to be integrated is determined, the following manner may be used but the present invention is not limited thereto: determining a memory before migration, an average memory change rate during migration, and a network transmission rate during migration for each virtual machine on the physical machines to be integrated; and

determining, according to the memory before migration, the average memory change rate during migration, and the network transmission rate during migration, of each virtual machine on the physical machines to be integrated, the transmission time in the last iteration during the previous migration for each virtual machine on the physical machines to be integrated.

For the foregoing manner of determining a memory before migration, an average memory change rate during migration, and a network transmission rate during migration for each virtual machine on the physical machines to be integrated, reference may be made to the determining process in step 202. In this embodiment, the result obtained in step 202 may be used directly. When the transmission time in the last iteration during the previous migration of each virtual machine on the physical machines to be integrated is determined according to the memory before migration, the average memory change rate during migration, and the network transmission rate during migration, of each virtual machine on the physical machines to be integrated, the following formula may be used, but the present invention is not limited thereto:

$$T_n = \frac{M * D^n}{R^{n+1}}$$

According to the foregoing expression of the transmission time in the last iteration during the previous migration of each virtual machine, the interrupt time t during migration of a virtual machine is as follows:

$$t = T_n + T_r = \frac{M * D^n}{R^{n+1}} + T_r$$

According to the foregoing analysis, the migration time used to migrate a virtual machine or the interrupt time when a virtual machine is migrated, is mainly determined according to the memory M before migration, the average memory change rate D during migration, and the network transmission rate R during migration, of the virtual machine.

204. Determine, according to the migration time and the interrupt time that are used to migrate each virtual machine on the physical machines to be integrated, a migration cost to migrate each virtual machine on the physical machines to be integrated.

With respect to this step, after the migration time used to migrate each virtual machine on the physical machines to be integrated is determined in step 202, and the interrupt time used to migrate each virtual machine on the physical machines to be integrated is determined in step 203, when the migration cost to migrate each virtual machine on the physical machines to be integrated is determined in this step, the migration time and the interrupt time that are used during migration of a virtual machine are mainly considered as the migration cost, and the migration cost is finally quantized by using a manner of allocating weights. the migration cost c to migrate each virtual machine on the physical machines to be integrated is determined by using, for example but not limited to, the following formula:

$$c = aT + bt$$

where, a and b refer to weights of the migration time and the interrupt time that are used to migrate the virtual machine, which may be allocated according to a service feature of a specific cluster. For example, for a cluster with a high performance requirement, for example, a high-performance computing cluster, the value of a is large to ensure the cluster performance; for a cluster with a high real-time requirement, the value of b is large to ensure the real-time requirement of the cluster. In addition, other determining manners may be selected, and this embodiment sets no limitation on the specific values of a and b.

205. Determine, according to the migration costs of all virtual machines on the physical machines to be integrated, power-off costs of the physical machines to be integrated, and select, from the physical machines to be integrated, a physical machine to be integrated with a power-off cost reaching a second threshold.

Specifically, this embodiment sets no limitation on the specific value of the second threshold, which may be set according to actual situations during a specific implementation. After the migration cost to migrate each virtual machine on the physical machines to be integrated is determined according to the manners in step 202 to step 204, when the power-off costs of the physical machines to be integrated are determined according to the migration costs of all virtual machines on the physical machines to be integrated in this step, a sum of the migration costs of all virtual machines on a physical machine to be integrated may be used as the power-off cost of the physical machine to be integrated; after the power-off costs of all physical machines to be integrated are obtained, in step 201, the number of physical machines containing all current virtual machines is judged by using a packing algorithm according to the total load of the current cluster, and N, the number of physical machines that need to be powered off is determined according to the current number of physical machines. Therefore, N physical machines with low power-off costs may be selected as the physical machines to be integrated with the power-off cost reaching the second threshold.

206. Determine all virtual machines on the physical machine to be integrated with the power-off cost reaching the second threshold as virtual machines to be migrated, and select target physical machines according to the cluster load.

With respect to this step, after the N physical machines with low power-off costs are selected as the physical machines to be integrated with the power-off cost reaching the second threshold in step 205, all the virtual machines on the physical machines to be integrated with the power-off cost reaching the second threshold may be directly determined as the virtual machines to be migrated in this step, so as to perform a migration operation for the virtual machines to be migrated in a subsequent step. When the target physical machines are selected according to the cluster load, the packing algorithm may still be used, and physical machines with a light load are selected as the target physical machines according to the cluster load. Alternatively, other selecting manners may be used. The selecting manner is not specifically limited in this embodiment.

207. Migrate the selected virtual machines to be migrated to the selected target physical machines, and control the physical machines to be integrated with the power-off cost reaching the second threshold to be powered off.

Specifically, when a selected virtual machine to be migrated is migrated to a selected target physical machine, memories of the virtual machine to be migrated may be copied to the target physical machine by using a plurality of iterations. In addition, to ensure that the virtual machine can continue to provide service during migration, during a first iteration, all memories of the virtual machine are first copied to the target physical machine, and meanwhile, to obtain a modified memory of the virtual machine, all the memories of the virtual machine are set to a read-only state; and during a second iteration, the modified memory of the virtual machine that is obtained during the first iteration is copied to the target physical machine. This process is repeated in the same manner till the modified memory of the virtual machine that is obtained during the previous iteration is smaller than the second threshold. Then the running of the virtual machine is interrupted and all modified memories are copied to the target physical machine to finally complete the migration. After the migration of all virtual machines is complete, the physical machines to be integrated with the power-off cost reaching the second threshold are controlled to be powered off, to cut down the power consumption cost and cooling cost, thereby saving resources.

Further, to avoid a case where hot spots occur on some physical machines after the cluster is integrated, after the migrating the selected virtual machines to be migrated to the selected target physical machines and controlling the physical machines to be integrated with the power-off cost reaching the second threshold to be powered off, the method provided in this embodiment further includes: simulating a cluster state after the cluster is integrated; and if finding that a hot spot occurs on a physical machine to be integrated, additionally migrating virtual machines on the physical machine to be integrated to another target physical machine with a light load, to ensure the service level after integration. In addition, in cases of high utilization of resources, with increasing requirements for load resources, the method provided in this embodiment further supports a process of re-powering on physical machines that have already been powered off to ensure compliance with the service level.

By using the method provided in this embodiment, a migration time and an interrupt time that are used to migrate a virtual machine are determined; and a migration cost to migrate the virtual machine is determined according to the migration time and the interrupt time, so that virtual cluster integration is optimized according to the migration cost. This can increase the service level of a virtual cluster on the basis of ensuring the integrated performance of the virtual cluster, thereby improving user experience.

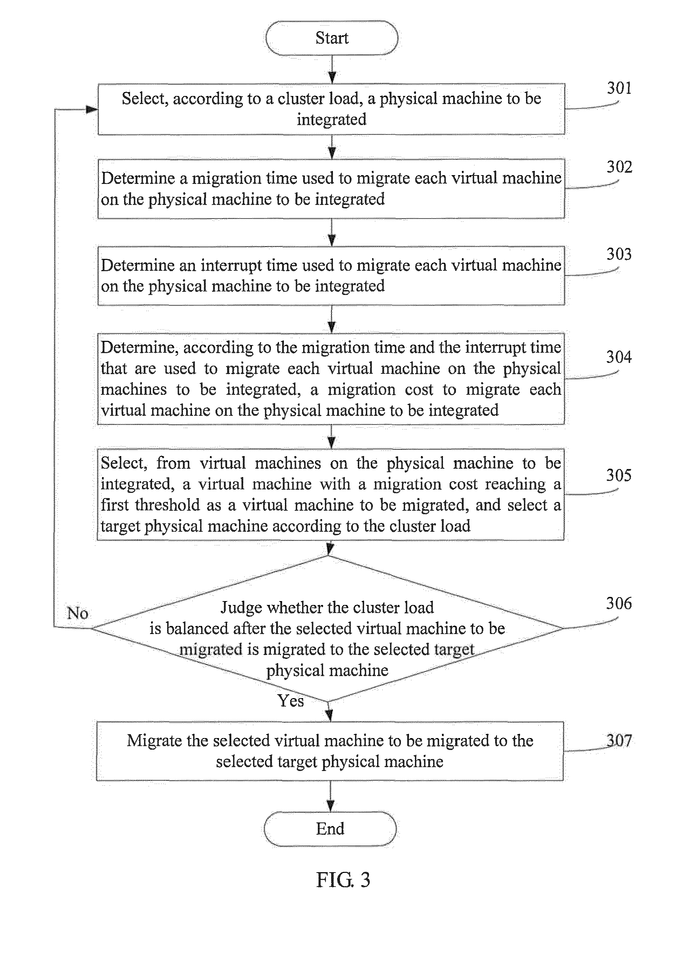

Another embodiment of the present invention provides a method for integration of a virtual cluster. With reference to the content of the foregoing embodiment, this embodiment describes the method for integration of a virtual cluster on the basis that load balance is implemented during the integration of the virtual cluster. As shown in FIG. 3, a flowchart of the method provided in this embodiment is specifically as follows:

301. Select, according to a cluster load, a physical machine to be integrated.

Specifically, to implement load balance, when the physical machine to be integrated is selected according to the cluster load in this step, a physical machine with a large load variance may be selected from a cluster and used as the physical machine to be integrated. For example, N physical machines with heavy loads are selected from the cluster and used as physical machines to be integrated, so that virtual machines on these physical machines are migrated to other light-loaded physical machines in subsequent steps to balance loads between the physical machines. The number of selected physical machines to be integrated, N, may be set according to actual conditions, which is not specifically limited in this embodiment.

302. Determine a migration time used to migrate each virtual machine on the physical machine to be integrated.

The specific implementation manner of this step is the same as the implementation manner in step 202 in the foregoing embodiment. For details, refer to the related description in step 202 in the foregoing embodiment, which is not further described herein.

303. Determine an interrupt time used to migrate each virtual machine on the physical machine to be integrated.

The specific implementation manner of this step is the same as the implementation manner in step 203 in the foregoing embodiment. For details, refer to the related description in step 203 in the foregoing embodiment, which is not further described herein.

304. Determine, according to the migration time and the interrupt time that are used to migrate each virtual machine on the physical machines to be integrated, a migration cost to migrate each virtual machine on the physical machine to be integrated.

The specific implementation manner of this step is the same as the implementation manner in step 204 in the foregoing embodiment. For details, refer to the related description in step 204 in the foregoing embodiment, which is not further described herein.

305. Select, from virtual machines on the physical machine to be integrated, a virtual machine with a migration cost reaching a first threshold as a virtual machine to be migrated, and select a target physical machine according to the cluster load.

With respect to this step, this embodiment sets no limitation on the specific value of the first threshold, and the value of the first threshold may be set according to actual conditions during a specific implementation. To balance loads between the physical machines, after the physical machine to be integrated is selected and the migration cost of each virtual machine on the physical machine to be integrated is determined, a virtual machine to be migrated may be selected according to the migration cost, to ensure that the cluster can run more stably on the basis of ensuring balanced loads between physical machines in the whole cluster. For example, N virtual machines with a migration cost reaching the first threshold on the physical machine to be integrated are selected, according to an ascending sequence of migration costs, as virtual machines to be migrated. In addition, to migrate virtual machines on a physical machine with a heavy load to a physical machine with a light load, when the target physical machine is selected according to the cluster load, a physical machine with a light load may be selected as the target physical machine according to the cluster load. The target physical machine may also be selected according to other manners, which are not specifically limited in this embodiment.

306. Judge whether the cluster load is balanced after the selected virtual machine to be migrated is migrated to the selected target physical machine; and if the cluster load is balanced, step 307 is performed; otherwise, step 301 is performed.

With respect to this step, when it is judged whether the cluster load is balanced after the selected virtual machine to be migrated is migrated to the selected target physical machine, the selected virtual machine to be migrated may be first migrated to the selected target physical machine on a simulated basis, and then a load variance between the physical machines is calculated; if the load variance value is smaller than a first preset threshold, it is judged that a load balancing degree meets the requirement, that is, the cluster load is balanced; if the load variance value is greater than the first preset threshold, it is judged that the load balancing degree does not meet the requirement, that is, the cluster load is unbalanced, and it is necessary to return to step 301 to re-perform the processes of selecting a physical machine to be integrated, determining a migration cost to migrate each virtual machine on the physical machine to be integrated, selecting, according to the migration cost, a virtual machine to be migrated, and selecting a target physical machine according to the cluster load. The specific value of the first preset threshold may be set according to actual conditions, which is not specifically limited in this embodiment.

307. Migrate the selected virtual machine to be migrated to the selected target physical machine. Then, the process ends.

Specifically, when a selected virtual machine to be migrated is migrated to a selected target physical machine, memories of the virtual machine to be migrated may also be copied to the target physical machine by using a plurality of iterations. In addition, to ensure that the virtual machine can continue to provide service during migration, during a first iteration, all memories of the virtual machine are first copied to the target physical machine, and meanwhile, to obtain a modified memory of the virtual machine, all the memories of the virtual machine are set to a read-only state; and during a second iteration, the modified memory of the virtual machine that is obtained during the first iteration is copied to the target physical machine. This process is repeated in the same manner till the modified memory of the virtual machine that is obtained during the previous iteration is smaller than a second preset threshold. Then the running of the virtual machine is interrupted and all modified memories are copied to the target physical machine to finally complete the migration of the virtual machine. In this way, load balance is implemented within the cluster, which not only increases the resource utilization of each physical machine but also ensures that each physical machine bears a proper load. This embodiment sets no limitation on the specific value of the second preset threshold. During a specific implementation, the value of the second preset threshold may be set according to actual conditions to reduce influences on a running service due to the interrupted running of the virtual machine.

By using the method provided in this embodiment, a migration time and an interrupt time that are used to migrate a virtual machine are determined; and a migration cost to migrate the virtual machine is determined according to the migration time and the interrupt time, so that cluster integration is optimized according to the migration cost. This can increase the service level of a cluster on the basis of ensuring the integrated performance of the cluster, thereby improving user experience.

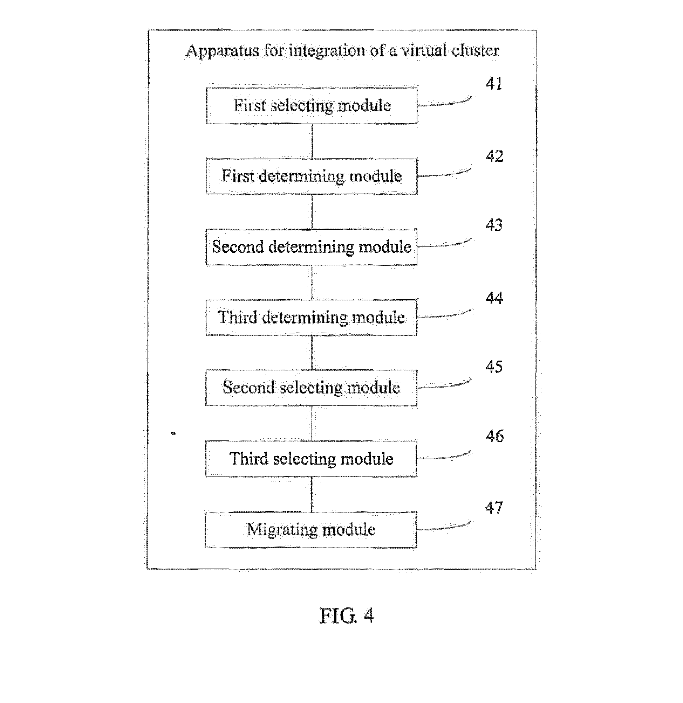

Another embodiment of the present invention provides an apparatus for integration of a virtual cluster, where the apparatus is configured to perform the method for integration of a virtual cluster that is provided in the foregoing embodiments. As shown in FIG. 4, the apparatus includes:

a first selecting module 41, configured to select, according to a cluster load, a physical machine to be integrated;
a first determining module 42, configured to determine a migration time used to migrate each virtual machine on the physical machine to be integrated selected by the first selecting module 41;
a second determining module 43, configured to determine an interrupt time used to migrate each virtual machine on the physical machine to be integrated selected by the first selecting module 41;

a third determining module 44, configured to determine, according to the migration time determined by the first determining module 42 and the interrupt time determined by the second determining module 43, a migration cost to migrate each virtual machine on the physical machine to be integrated;

a second selecting module 45, configured to select, according to the migration cost determined by the third determining module 44, a virtual machine to be migrated;

a third selecting module 46, configured to select a target physical machine according to the cluster load; and

a migrating module 47, configured to migrate the virtual machine to be migrated selected by the second selecting module 45 to the target physical machine selected by the third selecting module 46.

For the manner in which the first selecting module 41 selects a physical machine to be integrated, refer to the related descriptions of step 201 and step 301 in the foregoing embodiments, which are not further described herein.

With reference to the related description of step 202 in the foregoing embodiment, the first determining module 42 is specifically configured to determine a memory before migration, an average memory change rate during migration, and a network transmission rate during migration for each virtual machine on the physical machine to be integrated; and determine, according to the memory before migration, the average memory change rate during migration, and the network transmission rate during migration, of each virtual machine on the physical machine to be integrated, the migration time used to migrate each virtual machine on the physical machine to be integrated.

The first determining module 42 is specifically configured to classify all virtual machines on the physical machine to be integrated into different types according to a feature, and estimate a memory change rate during migration for virtual machines of a same type; record a memory change rate of each virtual machine on the physical machine to be integrated during a previous migration; and determine, according to the type, the estimated memory change rate, and the memory change rate during the previous migration, of each virtual machine on the physical machine to be integrated, the average memory change rate during migration for each virtual machine on the physical machine to be integrated.

With reference to the related description of step 203 in the foregoing embodiment, the second determining module 43 is specifically configured to determine a transmission time in a last iteration and a recovery time on a target physical machine during a previous migration for each virtual machine on the physical machine to be integrated; and determine, according to the transmission time and the recovery time, the interrupt time used to migrate each virtual machine on the physical machine to be integrated.

The second determining module 43 is specifically configured to determine a memory before migration, an average memory change rate during migration, and a network transmission rate during migration for each virtual machine on the physical machine to be integrated; and determine, according to the memory before migration, the average memory change rate during migration, and the network transmission rate during migration, of each virtual machine on the physical machine to be integrated, the transmission time in the last iteration during the previous migration for each virtual machine on the physical machine to be integrated. Further, with reference to the related description of step 305 in the foregoing embodiment, the second selecting module 45 is specifically configured to select, from virtual machines on the physical machine to be integrated, a virtual machine with a migration cost reaching a first threshold as the virtual machine to be migrated.

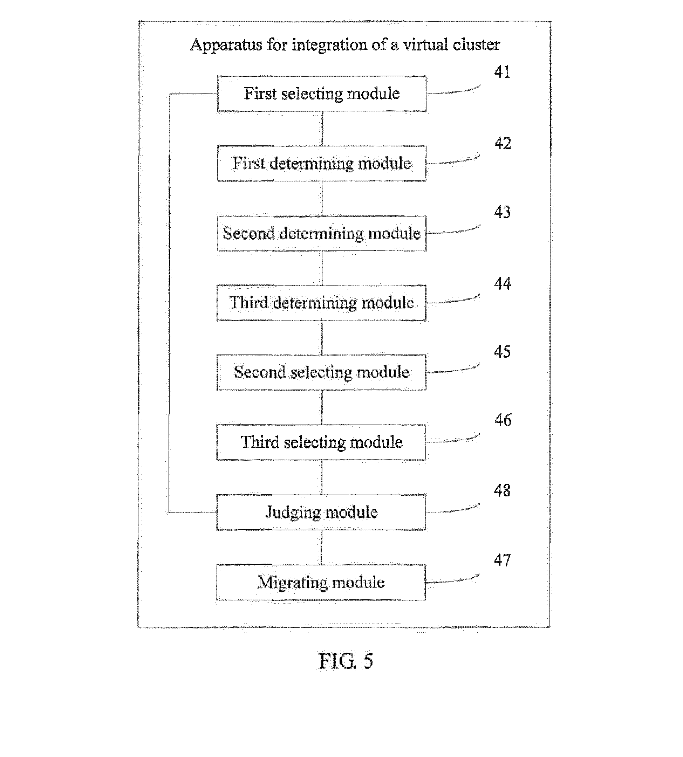

With reference to the related description of step 306 in the foregoing embodiment, as shown in FIG. 5, the apparatus further includes:

a judging module 48, configured to judge whether the cluster load is balanced after the selected virtual machine to be migrated is migrated to the selected target physical machine;

where the migrating module 47 is configured to: when the judging module 48 judges that the cluster load is balanced after the selected virtual machine to be migrated is migrated to the selected target physical machine, perform the step of migrating the selected virtual machine to be migrated to the selected target physical machine; and

when the judging module 48 judges that the cluster load is unbalanced after the selected virtual machine to be migrated is migrated to the selected target physical machine, the first selecting module 41, the first determining module 42, the second determining module 43, the third determining module 44, the second selecting module 45, and the third selecting module 46 re-perform the steps performed by them respectively.

With reference to the related descriptions of step 205 and step 206 in the foregoing embodiment, the second selecting module 45 is specifically configured to determine, according to the migration costs of all virtual machines on the physical machine to be integrated, a power-off cost of the physical machine to be integrated; and select, from the physical machine to be integrated, a physical machine to be integrated with a power-off cost reaching a second threshold, and determine all virtual machines on the physical machine to be integrated with the power-off cost reaching the second threshold as virtual machines to be migrated.

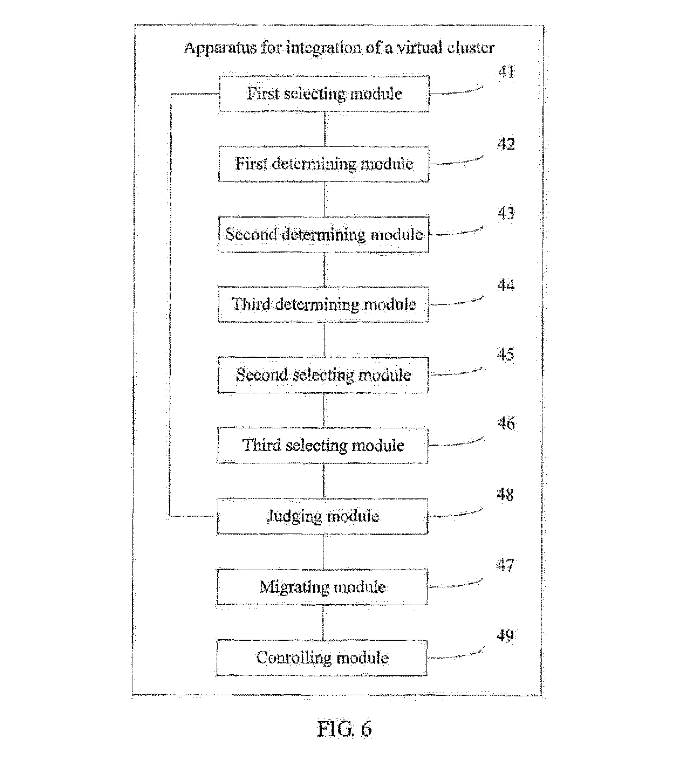

With reference to the related description of step 206 in the foregoing embodiment, as shown in FIG. 6, the apparatus further includes:

a controlling module 49, configured to control the physical machine to be integrated with the power-off cost reaching the second threshold to be powered off.

By using the apparatus provided in this embodiment, a migration time and an interrupt time that are used to migrate a virtual machine are determined; and a migration cost to migrate the virtual machine is determined according to the migration time and the interrupt time, so that virtual cluster integration is optimized according to the migration cost. This can increase the service level of a virtual cluster on the basis of ensuring the integrated performance of the virtual cluster, thereby improving user experience.

Another embodiment of the present invention provides a virtual cluster system, where the system includes a plurality of physical machines with communication connections, where each physical machine is deployed with at least one virtual machine and at least one physical machine of the plurality of physical machines is deployed with an apparatus for integration of a virtual cluster. The apparatus for integration of a virtual cluster is the apparatus for integration of a virtual cluster that is provided in the foregoing embodiment of the present invention. For the specific implementation method and modules of the apparatus for integration of a virtual cluster, reference may be made to the foregoing embodiment, but the specific implementation method and modules of the apparatus for integration of a virtual cluster are not limited thereto.

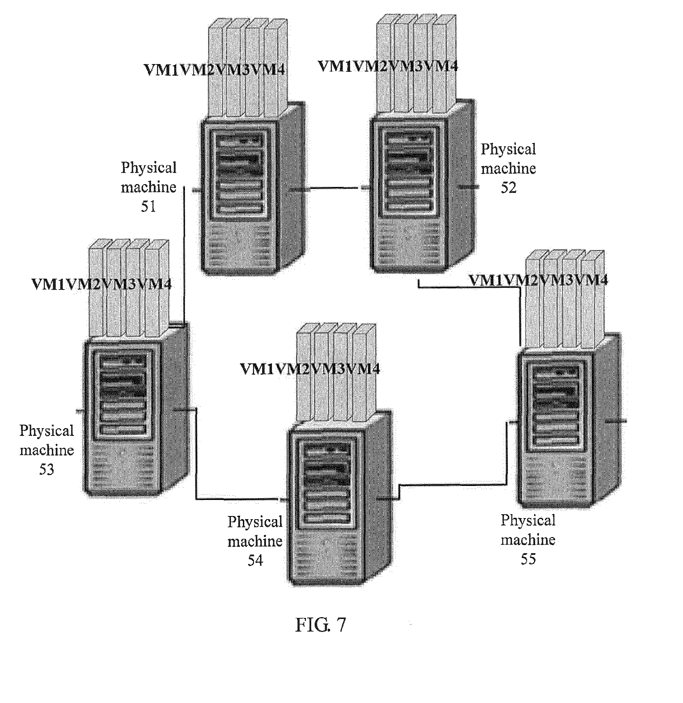

FIG. 7 is a schematic diagram of physical deployment of a virtual cluster system according to an embodiment of the present invention. As shown in FIG. 7, the virtual cluster system includes five physical machines (physical machines 51, 52, 53, 54, and 55) and a plurality of virtual machines (VM1, VM2, VM3, and VM4) hosted by these physical hosts. It should be noted that, in FIG. 7, the number of virtual machines hosted by each physical host may be the same or not the same, and the types of virtual machines hosted by each physical host may be the same or not the same, which are not limited to the illustration. The apparatus for integration of a virtual cluster that is provided in the embodiment of the present invention may be deployed on one physical host, so that the virtual cluster system is integrated by using the method for integration of a virtual cluster that is provided in the embodiment of the present invention.

By using the virtual cluster system provided in this embodiment, an apparatus for integration of a virtual cluster determines a migration time and an interrupt time that are used to migrate a virtual machine, and determines, according to the migration time and the interrupt time, a migration cost to migrate the virtual machine, so that virtual cluster integration is optimized according to the migration cost. This can increase the service level of a virtual cluster on the basis of ensuring the integrated performance of the virtual cluster, thereby improving user experience.

It should be noted that, when the apparatus for integration of a virtual cluster that is provided in the foregoing embodiment performs integration of the virtual cluster, the division of the foregoing functional modules is used as an example only for illustration. In actual applications, the foregoing functions may be accomplished by different functional modules according to needs, that is, the internal structure of the apparatus is divided into different functional modules to perform all or some of the foregoing functions. In addition, the apparatus for integration of a virtual cluster and the virtual cluster system that are provided in the foregoing embodiments belong to the same idea as the embodiments of the method for integration of a virtual cluster. For specific implementation processes of the apparatus for integration of a virtual cluster and the virtual cluster system, refer to the method embodiments, which are not further described herein.

The sequence numbers of the foregoing embodiments of the present invention are merely for description purpose but do not indicate the preference of the embodiments.

A person of ordinary skill in the art may understand that, all or a part of the steps of the foregoing embodiments may be implemented through hardware, or may be implemented by a program instructing relevant hardware. The program may be stored in a computer readable storage medium. The storage medium may be a read-only memory, a magnetic disk, an optical disk, or the like.

The foregoing descriptions are merely exemplary embodiments of the present invention, but are not intended to limit the present invention. Any modification, equivalent replacement, and improvement made within the spirit and principle of the present invention should fall within the protection scope of the present invention.

**Claims**

1. A method for integration of a virtual cluster, comprising:

selecting, according to a cluster load, a physical machine to be integrated;
determining a migration time and an interrupt time that are used to migrate each virtual machine on the physical machine to be integrated;
determining, according to the migration time and the interrupt time, a migration cost to migrate each virtual machine on the physical machine to be integrated;
selecting, according to the migration cost, a virtual machine to be migrated;
selecting a target physical machine according to the cluster load; and
migrating the selected virtual machine to be migrated to the selected target physical machine.

2. The method according to claim 1, wherein the determining a migration time used to migrate each virtual machine on the physical machine to be integrated specifically comprises:

determining a memory before migration, an average memory change rate during migration, and a network transmission rate during migration for each virtual machine on the physical machine to be integrated; and
determining, according to the memory before migration, the average memory change rate during migration, and the network transmission rate during migration, of each virtual machine on the physical machine to be integrated, the migration time used to migrate each virtual machine on the physical machine to be integrated.

3. The method according to claim 2, wherein the determining an average memory change rate during migration for each virtual machine on the physical machine to be integrated specifically comprises:

classifying all virtual machines on the physical machine to be integrated into different types according to a feature and estimating a memory change rate during migration for virtual machines of a same type;
recording a memory change rate of each virtual machine on the physical machine to be integrated during a previous migration; and
determining, according to the type, the estimated memory change rate, and the memory change rate during the previous migration, of each virtual machine on the physical machine to be integrated, the average memory change rate during migration for each virtual machine on the physical machine to be integrated.

4. The method according to claim 1, wherein the determining an interrupt time used to migrate each virtual machine on the physical machine to be integrated specifically comprises:

determining a transmission time in a last iteration and a recovery time on a target physical machine during a previous migration for each virtual machine on the physical machine to be integrated; and
determining, according to the transmission time and the recovery time, the interrupt time used to migrate each virtual machine on the physical machine to be integrated.

5. The method according to claim 4, wherein the determining a transmission time in a last iteration during a previous migration for each virtual machine on the physical machine to be integrated specifically comprises:

determining a memory before migration, an average memory change rate during migration, and a network transmission rate during migration for each virtual machine on the physical machine to be integrated; and
determining, according to the memory before migration, the average memory change rate during migration, and the network transmission rate during migration, of each virtual machine on the physical machine to be integrated, the transmission time in the last iteration during the previous migration for each virtual machine on the physical machine to be integrated.

6. The method according to claim 1, wherein the selecting, according to the migration cost, a virtual machine to be migrated specifically comprises:

selecting, from virtual machines on the physical machine to be integrated, a virtual machine with a migration cost reaching a first threshold as the virtual machine to be migrated.

7. The method according to claim 6, wherein before the migrating the selected virtual machine to be migrated to the selected target physical machine, the method further comprises:

judging whether the cluster load is balanced after the selected virtual machine to be migrated is migrated to the selected target physical machine;
if the cluster load is balanced, performing the step of migrating the selected virtual machine to be migrated to the selected target physical machine; and
if the cluster load is unbalanced, re-performing the steps of selecting, according to a cluster load, a physical machine to be integrated, determining a migration time and an interrupt time that are used to migrate each virtual machine on the physical machine to be integrated, determining, according to the migration time and the interrupt time, a migration cost to migrate each virtual machine on the physical machine to be integrated, selecting, according to the migration cost, a virtual machine to be migrated, and selecting a target physical machine according to the cluster load.

**8.** The method according to claim 1, wherein the selecting, according to the migration cost, a virtual machine to be migrated specifically comprises:

determining, according to the migration costs of all virtual machines on the physical machine to be integrated, a power-off cost of the physical machine to be integrated; and
selecting, from the physical machine to be integrated, a physical machine to be integrated with a power-off cost reaching a second threshold, and determining all virtual machines on the physical machine to be integrated with the power-off cost reaching the second threshold as virtual machines to be migrated.

**9.** The method according to claim 8, wherein after the migrating the selected virtual machine to be migrated to the selected target physical machine, the method further comprises:

controlling the physical machine to be integrated with the power-off cost reaching the second threshold to be powered off.

**10.** An apparatus for integration of a virtual cluster, comprising:

a first selecting module, configured to select, according to a cluster load, a physical machine to be integrated;
a first determining module, configured to determine a migration time used to migrate each virtual machine on the physical machine to be integrated selected by the first selecting module;
a second determining module, configured to determine an interrupt time used to migrate each virtual machine on the physical machine to be integrated selected by the first selecting module;
a third determining module, configured to determine, according to the migration time determined by the first determining module and the interrupt time determined by the second determining module, a migration cost to migrate each virtual machine on the physical machine to be integrated;
a second selecting module, configured to select, according to the migration cost determined by the third determining module, a virtual machine to be migrated;
a third selecting module, configured to select a target physical machine according to the cluster load; and
a migrating module, configured to migrate the virtual machine to be migrated selected by the second selecting module to the target physical machine selected by the third selecting module.

**11.** The apparatus according to claim 10, wherein the first determining module is specifically configured to determine a memory before migration, an average memory change rate during migration, and a network transmission rate during migration for each virtual machine on the physical machine to be integrated; and determine, according to the memory before migration, the average memory change rate during migration, and the network transmission rate during migration, of each virtual machine on the physical machine to be integrated, the migration time used to migrate each virtual machine on the physical machine to be integrated.

**12.** The apparatus according to claim 11, wherein the first determining module is specifically configured to classify all virtual machines on the physical machine to be integrated into a different type according to a feature, and estimate a memory change rate during migration for virtual machines of a same type; record a memory change rate of each virtual machine on the physical machine to be integrated during a previous migration; and determine, according to the type, the estimated memory change rate, and the memory change rate during the previous migration, of each virtual machine on the physical machine to be integrated, the average memory change rate during migration for each virtual machine on the physical machine to be integrated.

**13.** The apparatus according to claim 10, wherein the second determining module is specifically configured to determine a transmission time in a last iteration and a recovery time on a target physical machine during a previous migration for each virtual machine on the physical machine to be integrated; and determine, according to the transmission time and the recovery time, the interrupt time used to migrate each virtual machine on the physical machine to be integrated.

**14.** The apparatus according to claim 13, wherein the second determining module is specifically configured to determine a memory before migration, an average memory change rate during migration, and a network transmission rate during migration for each virtual machine on the physical machine to be integrated; and determine, according to the memory before migration, the average memory change rate during migration, and the network transmission rate during migration, of each virtual machine on the physical machine to be integrated, the transmission time in the last iteration during the previous migration for each virtual machine on the physical machine to be integrated.

15. The apparatus according to claim 10, wherein the second selecting module is specifically configured to select, from virtual machines on the physical machine to be integrated, a virtual machine with a migration cost reaching a first threshold as the virtual machine to be migrated.

16. The apparatus according to claim 15, further comprising:

a judging module, configured to judge whether the cluster load is balanced after the selected virtual machine to be migrated is migrated to the selected target physical machine;
wherein the migrating module is configured to: when the judging module judges that the cluster load is balanced after the selected virtual machine to be migrated is migrated to the selected target physical machine, perform the step of migrating the selected virtual machine to be migrated to the selected target physical machine; and when the judging module judges that the cluster load is unbalanced after the selected virtual machine to be migrated is migrated to the selected target physical machine, the first selecting module, the first determining module, the second determining module, the third determining module, the second selecting module, and the third selecting module re-perform the steps performed by them respectively.

17. The apparatus according to claim 10, wherein the second selecting module is specifically configured to determine, according to the migration costs of all virtual machines on the physical machine to be integrated, a power-off cost of the physical machine to be integrated; and select, from the physical machine to be integrated, a physical machine to be integrated with a power-off cost reaching a second threshold, and determine all virtual machines on the physical machine to be integrated with the power-off cost reaching the second threshold as virtual machines to be migrated.

18. The apparatus according to claim 17, further comprising:

a controlling module, configured to control the physical machine to be integrated with the power-off cost reaching the second threshold to be powered off.

19. A virtual cluster system, comprising a plurality of physical machines with communication connections, wherein each physical machine is deployed with at least one virtual machine and at least one physical machine of the plurality of physical machines is deployed with the apparatus for integration of a virtual cluster according to any one of claims 10 to 18.

Start

Select, according to a cluster load, a physical machine to be integrated ⟍101

Determine a migration time and an interrupt time that are used to migrate each virtual machine on the physical machine to be migrated ⟍102

Determine, according to the migration time and the interrupt time, a migration cost to migrate each virtual machine on the physical machine to be integrated ⟍103

Select, according to the migration cost, a virtual machine to be migrated ⟍104

Select a target physical machine according to the cluster load ⟍105

Migrate the selected virtual machine to be migrated to the selected target physical machine ⟍106

End

FIG. 1

```
                    ┌─────────────────────┐
                    │        Start        │
                    └─────────────────────┘
                               │
                               ▼
    ┌─────────────────────────────────────────────────────┐
    │   Select, according to a cluster load, physical      │      201
    │            machines to be integrated                 │
    └─────────────────────────────────────────────────────┘
                               │
                               ▼
    ┌─────────────────────────────────────────────────────┐
    │  Determine a migration time used to migrate each     │      202
    │  virtual machine on the physical machines to be      │
    │                  integrated                          │
    └─────────────────────────────────────────────────────┘
                               │
                               ▼
    ┌─────────────────────────────────────────────────────┐
    │  Determine an interrupt time used to migrate each    │      203
    │  virtual machine on the physical machines to be      │
    │                  integrated                          │
    └─────────────────────────────────────────────────────┘
                               │
                               ▼
    ┌─────────────────────────────────────────────────────┐
    │ Determine, according to the migration time and the   │
    │ interrupt time that are used to migrate each virtual │      204
    │ machine on the physical machines to be integrated, a │
    │ migration cost to migrate each virtual machine on    │
    │ the physical machines to be integrated               │
    └─────────────────────────────────────────────────────┘
                               │
                               ▼
    ┌─────────────────────────────────────────────────────┐
    │ Determine, according to the migration costs of all   │
    │ virtual machines on the physical machines to be      │
    │ integrated, power-off costs of the physical machines │      205
    │ to be integrated, and select, from the physical      │
    │ machines to be integrated, a physical machine to be  │
    │ integrated with a power-off cost reaching a second   │
    │ threshold                                            │
    └─────────────────────────────────────────────────────┘
                               │
                               ▼
    ┌─────────────────────────────────────────────────────┐
    │  Determine all virtual machines on the physical      │
    │  machine to be integrated with the power-off cost    │      206
    │  reaching the second threshold as virtual machines   │
    │  to be migrated, and select target physical machines │
    │            according to the cluster load             │
    └─────────────────────────────────────────────────────┘
                               │
                               ▼
    ┌─────────────────────────────────────────────────────┐
    │ Migrate the selected virtual machines to be migrated │
    │ to the selected target physical machines, and control│      207
    │ the physical machines to be integrated with the      │
    │ power-off cost reaching the second threshold to be   │
    │ powered off                                          │
    └─────────────────────────────────────────────────────┘
                               │
                               ▼
                    ┌─────────────────────┐
                    │         End         │
                    └─────────────────────┘
```

FIG. 2

```
                          ┌─────────────┐
                          │    Start    │
                          └──────┬──────┘
                                 ▼
        ┌────────────────────────────────────────────────┐
        │  Select, according to a cluster load, a physical │    301
        │  machine to be integrated                        │
        └────────────────────┬───────────────────────────┘
                             ▼
        ┌────────────────────────────────────────────────┐
        │ Determine a migration time used to migrate each │    302
        │ virtual machine on the physical machine to be    │
        │ integrated                                       │
        └────────────────────┬───────────────────────────┘
                             ▼
        ┌────────────────────────────────────────────────┐
        │ Determine an interrupt time used to migrate each │    303
        │ virtual machine on the physical machine to be    │
        │ integrated                                       │
        └────────────────────┬───────────────────────────┘
                             ▼
        ┌────────────────────────────────────────────────┐
        │ Determine, according to the migration time and  │    304
        │ the interrupt time that are used to migrate each │
        │ virtual machine on the physical machines to be   │
        │ integrated, a migration cost to migrate each     │
        │ virtual machine on the physical machine to be    │
        │ integrated                                       │
        └────────────────────┬───────────────────────────┘
                             ▼
        ┌────────────────────────────────────────────────┐
        │ Select, from virtual machines on the physical   │    305
        │ machine to be integrated, a virtual machine with │
        │ a migration cost reaching a first threshold as a │
        │ virtual machine to be migrated, and select a     │
        │ target physical machine according to the cluster │
        │ load                                             │
        └────────────────────┬───────────────────────────┘
                             ▼
```

No ◄ Judge whether the cluster load is balanced after the selected virtual machine to be migrated is migrated to the selected target physical machine    306

Yes

```
        ┌────────────────────────────────────────────────┐
        │ Migrate the selected virtual machine to be      │    307
        │ migrated to the selected target physical machine │
        └────────────────────┬───────────────────────────┘
                             ▼
                          ┌─────────────┐
                          │     End     │
                          └─────────────┘
```

FIG. 3

FIG. 4

Apparatus for integration of a virtual cluster

First selecting module — 41

First determining module — 42

Second determining module — 43

Third determining module — 44

Second selecting module — 45

Third selecting module — 46

Judging module — 48

Migrating module — 47

FIG. 5

Apparatus for integration of a virtual cluster

First selecting module — 41

First determining module — 42

Second determining module — 43

Third determining module — 44

Second selecting module — 45

Third selecting module — 46

Judging module — 48

Migrating module — 47

Conrolling module — 49

FIG. 6

VM1VM2VM3VM4

VM1VM2VM3VM4

Physical
machine
51

Physical
machine
52

VM1VM2VM3VM4

VM1VM2VM3VM4

VM1VM2VM3VM4

Physical
machine
53

Physical
machine
54

Physical
machine
55

FIG. 7

<table>
<tr><td colspan="2"><strong>INTERNATIONAL SEARCH REPORT</strong></td><td>International application No.<br><br>**PCT/CN2013/074704**</td></tr>
</table>

**A. CLASSIFICATION OF SUBJECT MATTER**

G06F 9/455 (2006.01) i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CPRSABS, CNKI, DWPI, SIPOABS: virtual, dummy, virtual machine, physical machine, migrate, migration, translate, transition, transport, transfer, move, transportation, displace, shift, remove, removal, select, selection, choose, choice, elect, pick, time, load, duty

**C. DOCUMENTS CONSIDERED TO BE RELEVANT**

| Category* | Citation of document, with indication, where appropriate, of the relevant passages | Relevant to claim No. |
|---|---|---|
| Y | WO 2012067431 A2 (WISETODD PTE. LTD.), 24 May 2012 (24.05.2012), claim 1 | 1, 6, 10, 15, 19 |
| Y | US 8095929 B1 (VMWARE INC.), 10 January 2012 (10.01.2012), claim 1 | 1, 6, 10, 15, 19 |
| A | CN 102096601 A (INSPUR (BEIJING) ELECTRONIC INFORMATION INDUSTRY CO., LTD.), 15 June 2011 (15.06.2011), the whole document | 1-19 |
| A | US 7203944 B1 (VERITAS OPERATING CORPORATION), 10 April 2007 (10.04.2007), the whole document | 1-19 |
| P, X | CN 102866915 A (HUAWEI TECHNOLOGIES CO., LTD.), 09 January 2013 (09.01.2013), claims 1-19 | 1-19 |

☐ Further documents are listed in the continuation of Box C.     ☒ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 12 July 2013 (12.07.2013) | **01 August 2013 (01.08.2013)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**DENG, Juan**<br><br>Telephone No.: (86-10) **62411644** |

Form PCT/ISA/210 (second sheet) (July 2009)

## INTERNATIONAL SEARCH REPORT
Information on patent family members

International application No.

**PCT/CN2013/074704**

| Patent Documents referred in the Report | Publication Date | Patent Family | Publication Date |
|---|---|---|---|
| WO 2012067431 A2 | 24.05.2012 | WO 2012067431 A3 | 20.09.2012 |
|  |  | KR 1201904 B1 | 16.11.2012 |
|  |  | KR 20120053850 A | 29.05.2012 |
| US 8095929 B1 | 10.01.2012 | None |  |
| CN 102096601 A | 15.06.2011 | None |  |
| US 7203944 B1 | 10.04.2007 | None |  |
| CN 102866915 A | 09.01.2013 | None |  |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210298873